(19) Europäisches Patentamt

European Patent Office

Office européen des brevets

(11) Publication number: **0 408 805 B1**

(12) **EUROPEAN PATENT SPECIFICATION**

(45) Date of publication of patent specification: **18.11.93** (51) Int. Cl.5: **A23L 1/22**

(21) Application number: **89121653.3**

(22) Date of filing: **23.11.89**

(54) Flavor delivery system for fat free foods.

(30) Priority: **29.06.89 US 371761**

(43) Date of publication of application:
**23.01.91 Bulletin 91/04**

(45) Publication of the grant of the patent:
**18.11.93 Bulletin 93/46**

(84) Designated Contracting States:
**ES GR**

(56) References cited:
**EP-A- 0 005 290**    **EP-A- 0 129 346**
**EP-A- 0 250 623**    **DE-A- 1 692 675**
**FR-A- 1 496 411**    **US-A- 4 414 229**

(73) Proprietor: **THE NUTRASWEET COMPANY (a Delaware corporation)**
**1751 Lake Cook Road**
**Deerfield Illinois 60015(US)**

(72) Inventor: **Singer, Norman S.**
**40 Ridge Road**
**Highland Park, Illinois 60035(US)**
Inventor: **Pookote, Suseelan**
**313 Vintage Lane**
**Buffalo Grove, Illinois 60089(US)**
Inventor: **Hatchwell, Leora**
**981 Twisted Oak Lane**
**Buffalo Grove, Illinois 60089(US)**
Inventor: **Anderson, Gale**
**1429 Lotus Drive**
**Round Lake Beach, Illinois 60073(US)**
Inventor: **Shazer, Arlette G.**
**1764 Highland Boulevard**
**Hoffman Estates, Illinois 60195(US)**
Inventor: **Booth, Barbara J.**
**676 Hillside Street**
**Elmhurst, Illinois 60126(US)**

(74) Representative: **Blum, Rudolf Emil Ernst et al**
**c/o E. Blum & Co**
**Patentanwälte**
**Vorderberg 11**
**CH-8044 Zürich (CH)**

**Description**

BACKGROUND OF THE INVENTION

The present invention relates generally to methods for delivery of flavors to food products and specifically to methods for delivery of fat soluble flavor compounds to nonfat and low-fat food products in which fat components have been replaced by non-lipid fat substitutes. With the development of novel nonfat and low-fat food products such as those described by Singer, et al. U.S. Patent No. 4,734,287 wherein fats or oils in food products are replaced by proteinaceous materials, there has developed a need for the development of compounds or flavor enhancers which can create a natural flavor impression reproducing that found in conventional high-fat foods. Full fat products possess a temporal flavor profile that is characteristically absent in food products wherein much of the fat is removed in an effort to reduce calories.

Differences in the efficacy of flavor components depend to a large degree upon their relative distributions between the fat and aqueous phases present in most food products. Patton, S., Flavor Thresholds of Volatile Fatty Acids, J. Food Science, 29, 679-680 (1964) discloses that long-chain volatile fatty acids have low flavor thresholds in water (i.e., can be detected at low concentrations) and higher flavor thresholds in oil. Aliphatic aldehydes have been shown to demonstrate the same flavor phenomena. See, Lea, C., Chem. and Indust., 1958, 1289 (1958). The reverse principle, however, has been known to hold true with respect to short-chain fatty acids. McDaniel, M., et al., Influence of Free Fatty Acids on Sweet Cream Butter Flavor, J. Food Science, 34, 251-253 (1969).

FR-A-1 496 411 discloses a food product, which is flavoured by flavour components that are added in an oil or emulsified in water.

US-A-4 414 229 discloses a flavouring system which comprises water-soluble and oil-soluble flavouring compounds in specific amounts, whereby the water phase of the flavouring system is distributed throughout the oil phase.

In food products wherein the fat components which are normally present have been replaced by non-lipid substitutes for fat as disclosed in EP-A-0 250 623 or EP-A-1 692 675, the retention and natural presentation of flavors associated with fat soluble flavor compounds is difficult due to the absence of fat within which such flavor compounds can be incorporated. Non-lipid fat substitutes which reproduce the organoleptic character of fats and oils tend to retain and present fat soluble flavor compounds in a manner different from fats. Thus, while blends of flavor ingredients have been mixed with various non-caloric and low-caloric carriers in an attempt to flavor low-fat foods, the resulting mixtures provide only a short, intense and fleeting flavor profile wherein flavor components are perceived for only very short periods of time in an unfamiliar or unnatural pattern. Accordingly, the goal of preparing flavoring ingredients which provide to nonfat and low-fat food produces the full temporal characteristics of full fat foods has been elusive.

SUMMARY OF THE INVENTION

The present invention provides a system for delivery of fat soluble flavor compounds into nonfat and low-fat food products in which fat components have been replaced by non-lipid fat substitutes so as to reproduce the natural taste impression of conventional full fat food products. Specifically, the invention provides a system for the delivery of fat soluble flavor compounds through the loading elevated levels of the flavor compounds into carrier fat globules so that the natural flavor of these compounds can be incorporated into food products while at the same time adding minimal amounts of fat. The invention provides methods for the manufacture and use of the flavor delivery system as well as improved nonfat and low-fat food products comprising the flavor delivery system.

DETAILED DESCRIPTION OF THE INVENTION

The present invention provides a system for the delivery of fat soluble flavor components into nonfat and low-fat food products. The invention relates to the partitioning of flavor components with respect to their solubility in fat and water. Flavor compounds with high solubility in fat can be loaded at elevated levels many times greater than their ordinary concentration into a fat globule. This flavor loaded fat globule acts as a carrier for incorporation into the low-fat food system. The flavor is then released in a more natural and familiar sequence and rate as the fat globules are warmed by the mouth, thereby generating a more natural temporal flavor profile which is characteristic of the flavor profile of conventional high-fat foods. Water soluble flavor components, on the other hand, are readily released in low or nonfat foods for sensory perception resulting in the usual pattern of perception for such components since this process doesn't impede or perturb their pattern of release. Therefore, by increasing the flavor load of these fat soluble compounds into fat globules, the flavor sensation of full fat foods is achieved through the incorporation of only a deminimus amount of fat.

Specifically, the flavor compounds to be incorporated into the nonfat food product are mixed with a fat, such as butterfat, which may be presented as a dairy cream at a temperature above the melting point of the fat. This promotes loading (partitioning) of the fat soluble flavor components into the fat globule. The fat soluble components may be in admixture with water soluble components as is found in many natural flavor extracts with no adverse effects upon the process. High speed mixing of this blend prevents separation of the components and the fat and provides maximum exposure and therefore maximum opportunity for partition. Subsequent homogenization results in an emulsion comprising stabilized fat globules containing the fat soluble flavor compounds. The emulsion is then cooled and may be added to nonfat and low-fat food products for flavor enhancement. The process of loading the fat soluble flavor compounds into the fat globule may be carried out at atmospheric pressure. Alternatively, it may be carried out at elevated pressures such as would be produced in HTST pasteurization equipment. A continuous process could be carried out in which fat soluble flavor compounds and the fat globules could be mixed, homogenized and later cooled under elevated pressure in an HTST pasteurization device.

The fat soluble flavor compounds are loaded into the fat globules at elevated concentrations up to their saturation point. In order to minimize the amount of fat incorporated into a nonfat or low-fat food product in the form of the flavor system, it is generally desired that the level of fat soluble flavor compounds be maximized in the fat globule. Nevertheless, the precise amounts of fat soluble flavor compounds incorporated into the fat globules and the concentrations of fat globules incorporated into food products may be varied according to the circumstances of a particular application.

Fat globules that may serve as a suitable carrier system may be any naturally occurring food grade fat such as, butterfat, beef fat, tallow, vegetable oils and emulsifiers. Preferred fats include butterfat and cholesterol free fats. In addition to comprising food grade fats, the fat globules of the present invention may also be comprised of lipophilic non-caloric fat substitutes. Suitable materials are contemplated to include synthetic fat substitutes such as sucrose polyester materials, natural materials such as jojoba oil and blends thereof together and with food grade fats and oils.

The present invention may be used to deliver virtually any natural or artificial food grade fat soluble flavor component. The invention is particularly useful with vanilla extract, vanillin, starter distillates, lipolyzed oils natural and artificial fatty flavours and botanical extracts.

The invention provides improved nonfat and low-fat food products in which fat components have been replaced by non-lipid fat substitutes. The fat globules comprising the fat soluble flavor compounds may be introduced to the food products at concentrations of less than about 1.0% by weight of the food product. In cases where it is desired to maintain a very low-fat level in the food product, the fat globules may be added at concentrations less than about 0.2% by weight of the food product. Preferred nonfat and low-fat food products include those in which fat components have been replaced by a proteinaceous marcocolloid such as described in U.S. Patent No. 4,734,287. Food products in which the flavoring system is particularly useful include those products which are nonfat or low-fat analogs of ice cream and other frozen dessert products; high acid products such as salad dressings and mayonnaise; solid dairy products such as cheeses and cream cheese; fermented dairy products such as sour cream and yogurt; dairy products such as milk and cream; semi-solid products such as icings and spreads; whipped toppings and sauces.

EXAMPLE 1: FLAVORING OF HIGH-FAT AND LOW-FAT FOODS

According to this example, 50 ml each of skim milk and heavy cream were flavored with 0.5 ml vanilla extract. Taste testing indicated that the mixture of skim milk and vanilla extract had a taste which was characterized as harsh, intense and fleeting with woody and alcoholic characteristics. The mixture of cream and vanilla extract was characterized as having a much milder, natural and lingering vanilla character, which blended more tightly into the dairy flavor complex of the cream. This demonstrates the important role played by fat in presenting a flavor impression that is perceived as natural.

EXAMPLE 2: VANILLA FLAVOR DELIVERY SYSTEM

According to this example, a vanilla flavor delivery system was formed using heavy cream (% Fat = 43), vanilla extract and a cream flavor was used to make an ice cream-like frozen dessert.

| Ingredients | Flavor System (%) | Frozen Dessert (%) |
|---|---|---|
| Heavy Cream | 55.76 | 0.58 |
| Vanilla Extract | 28.85 | 0.30 |
| Cream Flavor | 15. 39 | 0.16 |
| | 100.00 | 1.04 |

The ingredients listed above were combined in a jacketed kettle and warmed to 40°C (104°F) while mixing at a medium speed in a Dispermat mixer equipped with a 70-90 mm diameter Cowles-type impeller (UMA-Getzmann GMBH). This mixture was homogenized at 21093 kPa (3000 psi) and then cooled to 16°C (60°F) while being mixed by the Dispermat to yield the vanilla flavor delivery system comprising globules of milk fat into which the fat soluble flavor compounds of the vanilla extract and cream flavor were loaded. The flavor delivery system was then added to a fat-free frozen dessert mixture at a concentration of 1.04% (thus adding 0.25% fat to the dessert mixture) and the mixture was frozen and whipped as in the preparation of conventional ice cream. The product so made had a full, rich and lingering vanilla flavor with a natural vanilla character.

EXAMPLE 3: CREAM CHEESE-TYPE PRODUCT

According to this example, a cream cheese-type product in which natural dairy fat had been replaced with a proteinaceous fat substitute was provided with butter and cream flavor by means of a flavor delivery system according to the invention. The flavor delivery system was formed by blending 5 parts (by weight) butter flavor (OTANI) and 5 parts cream flavor (Grindsted) into 500 parts Half and Half (11.7% butterfat, Deans Foods) using a Dispermat mixer at 500 rpm. The cream/flavor mixture was heated to 63°C (145°F) and was then homogenized at 63°C (145°F) at 17578 kPa (2500 psi) using a Rannie High Pressure Homogenizer (Rannie a/s, Albertslund, Denmark) to form the flavor delivery system.

| Ingredients | Source | Parts |
|---|---|---|
| Farmers Cheese | Michigan Farms | 3490 |
| Pressed Dry Curd Cottage Cheese | Deans | 2459 |
| Proteinaceous Fat Substitute | | 3300 |
| Meyprogat 150 (2%) | Hi-Tek Polymer | 60 |
| Locust Bean Gum 175 (2%) | Hi-Tek Polymer | 120 |
| Carageenan CSMI (2%) | Hercules | 30 |
| Salt | Diamond Crystal | 30 |
| Cream Flavor | Grindsted | 5 |
| Butter Flavor | OTANI | 5 |
| Half and Half (11.7% fat) | Deans | 500 |
| Potassium Sorbate | Tri-K Industries | 1 |
| | | 10,000 |

The flavor delivery system was incorporated into a low-fat cream cheese-type product produced according to the following method. Farmers Cheese (3490 parts, Michigan Farms) and Pressed Dry Curd Cottage Cheese (2459 parts, Deans Foods) were ground in a chopper for 15 minutes and transferred to a Dispermat mixer. Proteinaceous fat substitute prepared according to Singer, et al., U.S. Patent No. 4,734,287 was added (3300 parts) to the cheeses in the mixer which were then heated to 74°C (165°F). A mixture of prehydrated gums including Meyprogat 150 (2%) (60 parts, Hi-Tek Polymer), locust bean gum 175 (2%) (120 parts, Hi-Tek Polymer) and carageenan CSMI (2%) (30 parts, Hercules) were added to the mixer and blended for one minute. At this time, 30 parts salt (Alberger Fine Flake, Diamond Crystal), the flavor delivery system described above and potassium sorbate (1 part, Tri-K Industries) were added to the mixer. The ingredients were then homogenized at 77 341 kPa (11,000 psi) at 74°C (165°F) and were packed off at 71°C (160°F). The product so produced had the flavor of a conventional cream cheese product.

4

EXAMPLE 4: RANCH DRESSING PRODUCT

According to this example, a ranch dressing product in which natural fat had been replaced with a proteinaceous fat substitute was provided with a flavor delivery system to improve the lingering aftertaste characteristic which is desired of salad dressings.

| Ingredients | Source | Parts |
|---|---|---|
| Buttermilk, Cultured Low-fat | Dean Foods | 41675 |
| Skim Milk | Dean Foods | 10957 |
| Xanthan Gum | Kelco | 110 |
| Propylene Glycol Alginate | Kelco | 90 |
| Modified Food Starch | Staley | 1000 |
| Maltodextrin | Staley | 2000 |
| Sugar | C&H | 1000 |
| Corn Syrup Solids 35K | Staley | 5000 |
| Garlic Powder | Gilroy | 300 |
| Onion Powder | Gilroy | 300 |
| Black Paper | Saratoga Seasonings | 60 |
| Parsley | Saratoga Seasonings | 40 |
| Nonfat Dry Milk | Land O'Lakes | 3000 |
| Monosodium Glutamate | Saratoga Seasonings | 250 |
| Potassium Sorbate | Tri-K Industries | 1000 |
| Proteinaceous Fat Substitute | | 20000 |
| Whole Egg | Waldbaum | 2000 |
| Mixed Tocopherols | Henkel | 6 |
| Soybean Oil | ADM | 2000 |
| Liponate GC | Lipo Chem | 2 |
| Dairy Flavor | IFF 73568691 | 50 |
| Mouthfeel Flavor | IFF 13561188 | 300 |

5

| Ingredients | Source | Parts |
|---|---|---|
| Garlic Flavor | Takasago TAK-7516 | 10 |
| Onion Flavor | F&C 080841 | 400 |
| Celery Oil at 0.01% in Vegetable Oil | McCormick Strange/Plant | 100 |
| White Distilled Vinegar | Fleischmann 100 gr | 6000 |
| Sodium Acetate | Miles | 100 |
| Flavor | Givaudan TPS 6551 | 200 |
| Salt | Diamond Crystal | 2050 |
| | | 100,000 |

The flavor delivery system was formed by blending fat soluble flavor ingredients with soybean oil in a Dispermat high speed mixer. To 2000 parts soybean oil was mixed Liponate GC, a caprylic capric triglyceride (2 parts, Lipo Chem), mouthfeel flavor (300 parts, IFF 13561188), garlic flavor (10 parts, Takasago TAK-7516), onion flavor (500 parts, F&C 80841), celery flavor 0.01% in oil (100 parts, McCormick), mixed tocopherols (6 Parts, Henkel) and dairy flavor (50 parts, IFF 73568691). The blended ingredients were warmed to 63°C (145°F) and then homogenized at 17578 kPa (2500 psi) prior to being cooled to room temperature.

The flavor delivery system was incorporated into a low-fat ranch dressing product produced according to the following method. Cultured low-tat buttermilk and skim milk were added to a batch kettle according to the proportions presented in the table above. The gums, starch, maltodextrin, sugar, corn syrup solids, spices, nonfat milk, monosodium glutamate and potassium sorbate preservatives were dry-blended in the proportions presented above and were then added to the kettle under shearing conditions. Proteinaceous fat substitute prepared according to Singer, et al. U.S. Patent No. 4,734,287 and whole egg were added under shear conditions to blend them into the mixture and the flavor delivery system was then also added.

Vinegar, sodium acetate and Givaudan TPS 6551 flavor were then added slowly to acidify the mixture and salt was added. The mixture was homogenized at 17578 kPa (2500 psi) and was then heated to 82° (180°F) and held at that temperature for 30 seconds before being cooled to 74°C (165°F) and packed off. The product so produced had the flavor of a conventional high-fat ranch dressing product.

## Claims

1. A method for the delivery of fat soluble flavor compounds into nonfat and low-fat food products in which fat components have been replaced by non-lipid fat substitutes comprising the step of introducing into said food products fat globules comprising elevated levels of fat soluble flavor compounds.

2. The method of claim 1 wherein said fat globules are introduced into said food products at a concentration of less than 1.0% by weight.

3. The method of claim 2 wherein said fat globules are introduced into said food products at a concentration of less than 0.2% by weight.

4. The method of claim 1 wherein said flavor compounds are selected from the group consisting of vanilla extract, vanillin, starter distillates, lipolyzed oils, botanical extracts, natural and artificial fatty flavors.

5. The method of claim 1 wherein said fat globule comprises material selected from the group consisting of butterfat, beef fat, tallow, vegetable oils and emulsifiers.

6

6. The method of claim 1 wherein said fat globules comprise material selected from the group consisting of sucrose polyesters and jojoba oil.

7. The method of claim 1 wherein said fat globules comprising fat soluble flavor compounds are incorporated in the form of an emulsion.

8. In a nonfat or low-fat food product in which fat components have been replaced by non-lipid fat substitutes, the improvement comprising delivering fat soluble flavor compounds into the food product by introducing into said food product, fat globules comprising elevated levels of fat soluble flavor compounds.

9. The product of claim 8 wherein said fat globules are introduced at a concentration of less than 1.0% by weight.

10. The product of claim 9 wherein said fat globules are introduced at a concentration of less than 0.2% by weight.

11. The product of claim 8 wherein said flavor compounds are selected from the group consisting of vanilla extract, starter distillates, lipolyzed oils, botanical extracts, natural and artificial fatty flavors.

12. The product of claim 8 wherein said fat globules comprise material selected from the group consisting of butterfat, beef fat, tallow, vegetable oils and emulsifiers.

13. The product of claim 8 wherein said fat globules comprise material selected from the group consisting of sucrose polyesters and jojoba oil.

14. The product of claim 8 wherein said fat globules comprising fat soluble flavor compounds are incorporated in the form of an emulsion.

15. The product of claim 8 wherein said fat substitute is a proteinaceous material.

16. The product of claim 8 wherein said product is a frozen desert product.

17. The product of claim 8 wherein said product is an analog of a high acid product selected from the group consisting of salad dressings and mayonnaise.

18. The product of claim 8 wherein said product is an analog of a solid dairy product selected from the group consisting of cheeses and cream cheese.

19. The product of claim 8 wherein said product is an analog of a fermented dairy product selected from the group consisting of sour cream and yogurt.

20. The product of claim 8 wherein said product is an analog of a dairy product selected from the group consisting of milk and cream.

21. The product of claim 8 wherein said product is an analog of a semi-solid product selected from the group consisting of icings and spreads.

22. The product of claim 8 wherein said product is an analog of a whipped topping.

23. The product of claim 8 wherein said product is an analog of a sauce.

24. A system for the delivery of fat soluble flavor compounds into nonfat and low-fat food products in which fat components have been replaced by non-lipid fat substitutes the system comprising fat globules comprising elevated levels of fat soluble flavor compounds.

25. The flavor delivery system of claim 24 wherein said fat soluble flavor compounds are selected from the group consisting of vanilla extract, starter distillates, lipolyzed oils, botanical extracts, natural and

EP 0 408 805 B1

artificial fatty flavors.

26. The flavor delivery system of claim 24 wherein said fat globule comprises a member selected from the group consisting of butterfat, beef fat, tallow, vegetable oils and emulsifiers.

**Patentansprüche**

1. Ein Verfahren zur Abgabe von fettlöslichen Geschmacksverbindungen in fettfreie und fettarme Nahrungsmittelprodukte, in denen Fettkomponenten ersetzt worden sind durch lipidfreie Fettersatzstoffe, worin die Stufe enthalten ist, daß in diese Nahrungsmittelprodukte Fettkügelchen eingeführt werden, die erhöhte Mengen an fettlöslichen Geschmacksverbindungen enthalten.

2. Das Verfahren nach Anspruch 1, worin diese Fettkügelchen in diese Nahrungsmittelprodukte eingeführt werden in einer Konzentration von weniger als 1,0 Gew.-%.

3. Das Verfahren nach Anspruch 2, worin diese Fettkügelchen in diese Nahrungsmittelprodukte eingeführt werden in einer Konzentration von weniger als 0,2 Gew.-%.

4. Das Verfahren nach Anspruch 1, worin diese Geschmacksverbindungen ausgewählt sind aus der Gruppe bestehend aus Vanilleextrakt, Vanillin, Starter-Destillaten, lipolysierten Ölen, botanischen Extrakten, natürlichen und künstlichen Fettgeschmacksstoffen.

5. Das Verfahren nach Anspruch 1, worin diese Fettkügelchen Material enthalten, ausgewählt aus der Gruppe bestehend aus Butterfett, Rinderfett, Talg, pflanzlichen Ölen und Emulgatoren.

6. Das Verfahren nach Anspruch 1, worin diese Fettkügelchen Material enthalten, ausgewählt aus der Gruppe bestehend aus Saccharose-Polyester und Jojobaöl.

7. Das Verfahren nach Anspruch 1, worin diese Fettkügelchen, die fettlösliche Geschmacksverbindungen enthalten, eingearbeitet sind in Form einer Emulsion.

8. Ein fettfreies oder fettarmes Nahrungsmittelprodukt, worin Fettkomponenten ersetzt worden sind durch lipidfreie Ersatzstoffe, worin die Verbesserung darin besteht, daß fettlösliche Geschmacksverhindungen in das Nahrungsmittelprodukt abgegeben werden durch Einführung von Fettkügelchen in dieses Nahrungsmittelprodukt, die erhöhte Mengen an fettlöslichen Geschmacksverbindungen enthalten.

9. Das Produkt nach Anspruch 8, worin diese Fettkügelchen in einer Konzentration von weniger als 1,0 Gew.-% eingeführt werden.

10. Das Produkt nach Anspruch 9, worin diese Fettkügelchen in einer Konzentration von weniger als 0,2 Gew.-% eingeführt werden.

11. Das Produkt nach Anspruch 8, worin diese Geschmacksverbindungen ausgewählt sind aus der Gruppe bestehend aus Vanilleextrakt, Starter-Destillaten, lipolysierten Ölen, botanischen Extrakten, natürlichen und künstlichen Fettgeschmacksstoffen.

12. Das Produkt nach Anspruch 8, worin diese Fettkügelchen Material enthalten, ausgewählt aus der Gruppe bestehend aus Butterfett, Rinderfett, Talg, pflanzlichen Ölen und Emulgatoren.

13. Das Produkt nach Anspruch 8, worin diese Fettkügelchen Material enthalten, ausgewählt aus der Gruppe bestehend aus Saccharose-Polyester und Jojobaöl.

14. Das Produkt nach Anspruch 8, worin diese Fettkügelchen, die fettlösliche Geschmacksverbindungen enthalten, in Form einer Emulsion eingearbeitet sind.

15. Das Produkt nach Anspruch 8, worin dieser Fettersatzstoff ein eiweißhaltiges Material ist.

16. Das Produkt nach Anspruch 8, worin dieses Produkt ein gefrorenes Dessert-Produkt ist.

8

**17.** Das Produkt nach Anspruch 8, worin dieses Produkt ein Analog eines stark sauren Produktes ist, ausgewählt aus der Gruppe bestehend aus Salatsoßen und Mayonnaise.

**18.** Das Produkt nach Anspruch 8, worin dieses Produkt ein Analog eines festen Molkereiproduktes ist, ausgewählt aus der Gruppe bestehend aus Käsen und Rahmkäse.

**19.** Das Produkt nach Anspruch 8, worin dieses Produkt ein Analog eines fermentierten Molkereiproduktes ist, ausgewählt aus der Gruppe bestehend aus saurer Sahne und Joghurt.

**20.** Das Produkt nach Anspruch 8, worin dieses Produkt ein Analog eines Molkereiproduktes ist, ausgewählt aus der Gruppe bestehend aus Milch und Sahne.

**21.** Das Produkt nach Anspruch 8, worin dieses Produkt ein Analog eines halbfesten Produktes ist, ausgewählt aus der Gruppe bestehend aus Zuckergüssen und Aufstrichen.

**22.** Das Produkt nach Anspruch 8, worin dieses Produkt ein Analog eines geschlagenen Überzugs ist.

**23.** Das Produkt nach Anspruch 8, worin dieses Produkt ein Analog einer Soße ist.

**24.** Ein System zur Abgabe von fettlöslichen Geschmacksverbindungen in fettfreie und fettarme Nahrungsmittelprodukte, in denen Fettkomponenten ersetzt worden sind durch lipidfreie Fettersatzstoffe, wobei das System Fettkügelchen enthält, die erhöhte Mengen an fettlöslichen Geschmacksverbindungen enthalten.

**25.** DasGeschmacksabgabesystemnachAnspruch24,worindiesefettlöslichenGeschmacksverbindungen ausgewählt sind aus der Gruppe bestehend aus Vanilleextrakt, Starter-Destillaten, lipolysierten Ölen, botanischen Extrakten, natürlichen und künstlichen Fettgeschmacksstoffen.

**26.** Das Geschmacksabgabesystem nach Anspruch 24, worin diese Fettkügelchen ein Glied enthalten, ausgewählt aus der Gruppe bestehend aus Butterfett, Rinderfett, Talg, pflanzlichen Ölen und Emulgatoren.

## Revendications

**1.** Procédé pour introduire des composés aromatisants solubles dans les graisses dans des produits alimentaires sans matière grasse ou à faible teneur en matière grasse dans lesquels les constituants gras ont été remplacés par des succédanés de graisses non lipidiques, comprenant l'étape d'introduction dans lesdits produits alimentaires de globules de graisse contenant des concentrations élevées de composés aromatisants solubles dans les graisses.

**2.** Procédé selon la revendication 1, dans lequel lesdits globules de graisse sont introduits dans lesdits produits alimentaires à une concentration inférieure à 1,0 % en masse.

**3.** Procédé selon la revendication 2, dans lequel lesdits globules de graisse sont introduits dans lesdits produits alimentaires à une concentration inférieure à 0,2 % en masse.

**4.** Procédé selon la revendication 1, dans lequel lesdits composés aromatisants sont choisis dans le groupe constitué par un extrait de vanille, la vanilline, des distillats de levain, des huiles lipolysées, des extraits végétaux, des arômes gras naturels et artificiels.

**5.** Procédé selon la revendication 1, dans lequel ledit globule de graisse comprend une matière choisie dans le groupe constitué par la matière grasse du lait, la graisse de boeuf, le suif, les huiles végétales et des émulsionnants.

**6.** Procédé selon la revendication 1, dans lequel lesdits globules de graisse comprennent une matière choisie dans le groupe constitué par les polyesters de sucrose et l'huile de jojoba.

**7.** Procédé selon la revendication 1 dans lequel lesdits globules de graisse contenant les composés aromatisants solubles dans les graisses sont incorporés sous forme d'une émulsion.

**8.** Dans un produit alimentaire sans matière grasse ou à faible teneur en matière grasse dans lequel les constituants gras ont été remplacés par des succédanés de graisses non lipidiques, le perfectionnement comprenant l'incorporation dans le produit alimentaire de composés aromatisants solubles dans les graisses par introduction dans ledit produit alimentaire de globules de graisse contenant des concentrations élevées de composés aromatisants solubles dans les graisses.

**9.** Produit selon la revendication 8, dans lequel lesdits globules de graisse sont introduits à une concentration inférieure à 1,0 % en masse.

**10.** Produit selon la revendication 9, dans lequel lesdits globules de graisse sont introduits à une concentration inférieure à 0,2 % en masse.

**11.** Produit selon la revendication 8, dans lequel lesdits composés aromatisants sont choisis dans le groupe constitué par un extrait de vanille, des distillats de levain, des huiles lipolysées, des extraits végétaux, des arômes gras naturels et artificiels.

**12.** Produit selon la revendication 8, dans lequel ledit globule de graisse comprend une matière choisie dans le groupe constitué par la matière grasse du lait, la graisse de boeuf, le suif, les huiles végétales et des émulsionnants.

**13.** Produit selon la revendication 8, dans lequel lesdits globules de graisse comprennent une matière choisie dans le groupe constitué par les polyesters de sucrose et l'huile de jojoba.

**14.** Produit selon la revendication 8 dans lequel lesdits globules de graisse contenant les composés aromatisants solubles dans les graisses sont incorporés sous forme d'une émulsion.

**15.** Produit selon la revendication 8 dans lequel ledit succédané de graisse est une substance de type protéique.

**16.** Produit selon la revendication 8 dans lequel ledit produit est un dessert surgelé.

**17.** Produit selon la revendication 8 dans lequel ledit produit est un analogue d'un produit très acide choisi dans le groupe constitué par les assaisonnements de salades et la mayonnaise.

**18.** Produit selon la revendication 8 dans lequel ledit produit est un analogue d'un produit laitier solide choisi dans le groupe constitué par les fromages et les fromages blancs.

**19.** Produit selon la revendication 8 dans lequel ledit produit est un analogue d'un produit laitier fermenté choisi dans le groupe constitué par la crème acide et le yaourt.

**20.** Produit selon la revendication 8 dans lequel ledit produit est un analogue d'un produit laitier choisi dans le groupe constitué par le lait et la crème.

**21.** Produit selon la revendication 8 dans lequel ledit produit est un analogue d'un produit semi-solide choisi dans le groupe constitué par les glaçages et les pâtes à tartiner.

**22.** Produit selon la revendication 8, dans lequel ledit produit est un analogue d'un décor en crème fouettée.

**23.** Produit selon la revendication 8, dans lequel ledit produit est un analogue d'une sauce.

**24.** Système d'introduction de composés aromatisants solubles dans les graisses dans des produits alimentaires sans matière grasse ou à faible teneur en matière grasse dans lesquels les constituants gras ont été remplacés par des succédanés de graisses non lipidiques, le système comprenant des globules de graisse contenant des concentrations élevées de composés aromatisants solubles dans les

10

graisses.

25. Système d'introduction d'arômes selon la revendication 24, dans lequel lesdits composés aromatisants solubles dans les graisses sont choisis dans le groupe constitué par un extrait de vanille, des distillats de levain, des huiles lipolysées, des extraits végétaux, des arômes gras naturels et artificiels.

26. Système d'introduction d'arômes selon la revendication 24, dans lequel ledit globule de graisse comprend un constituant choisi dans le groupe constitué par la matière grasse du lait, la graisse de boeuf, le suif, les huiles végétales et des émulsionnants.